**Europäisches Patentamt**

**European Patent Office**

**Office européen des brevets**

(11) Publication number : **0 515 298 A2**

# EUROPEAN PATENT APPLICATION

(21) Application number : **92500060.6**

(51) Int. Cl.⁵ : **G09G 3/36**

(22) Date of filing : **12.05.92**

(30) Priority : **20.05.91 ES 9101214**

(43) Date of publication of application :
**25.11.92 Bulletin 92/48**

(84) Designated Contracting States :
**AT BE CH DE DK FR GB GR IT LI NL PT SE**

(71) Applicant : **CIRSA COMPANIA DE INVERSIONES S.A.**
**Cta. de Castellar, 298 al 302**
**E-08226 Tarrasa, Barcelona (ES)**

(72) Inventor : **Bosch, Ramon Pericas**
**Cta. de Castellar, 298 al 302**
**E-08226 Tarrasa, Barcelona (ES)**

(74) Representative : **Elzaburu Marquez, Alberto et al**
**Sres. Elzaburu Industrial Property Attorneys**
**Miguel Angel, 21**
**E-28010 Madrid (ES)**

(54) **Colour image display device of the liquid-crystal type, particularly for recreational machines.**

(57) Colour image display device of the liquid-crystal type, particularly for recreational machines. The device consists of a stack of simple liquid-crystal display elements (LCD elements) according to twisted nematic technology, as many LCD elements being stacked as colours, white excepted, are desired ; interposed polarising filters of various shades with predetermined shape and predetermined direction, constituting a compact assembly with the LCD elements ; each being activators of alternating current and associated with each one of the LCD elements, mosaics of points, lines and complex shapes being arranged in the elements, the various images being achieved through sequences of "activated" /"non-activated" states of the elements ; and a system of transflection illumination.

EP 0 515 298 A2

# FIG.- 2

(a)   (b)   (c)

The present invention relates to a colour image display device of the liquid-crystal type, particularly for recreational machines, of the kind in which the prize is won by combining various figures, a table of prizes existing which distinguishes between the said figures.

Several display devices for the above use are already known, it being possible to classify them into those of the mechanical type and those of the cathode-ray tube (CRT) type.

In the devices of mechanical type, the various images of the game are represented on the outer faces of several continuous (endless) belts whose motion is produced by purely mechanical means, mention being made by way of example of a combination of toothed wheels which mesh with the inner face, also toothed, of the continuous belt (see for example Spanish Utility Model 273,922); or a set of small-diameter drums with a toothed surface, which mesh with the inner face, also toothed, of several continuous belts (see for example Utility Model 271,429). Also, the motion of the continuous belts may be produced by friction. The disadvantages possessed by all these mechanical systems are readily appreciated: slowness of movement, basic failures of the mechanical components, etc.

The cathode-ray tube type uses television and video technology to project and vary the images. It is appreciated that, in this type, the movements are rapid, decrease the possibility of failures and greatly increase the possibilities for varying and combining images. However, the application of this technology to recreational machines results in a high, often prohibitive price.

The authors of the present invention have researched a display system which combines the advantages of the cathode-ray tube (CRT) system with a low cost price, as possessed by the mechanical devices.

This system has been made possible by applying liquid-crystal technology.

## TECHNICAL FUNDAMENTALS

A liquid-crystal display (henceforth abbreviated to LCD) consists of a sandwich of two sheets of glass, sealed at the boundaries and filled with an organic material ("liquid crystal") which, conditioned by its physical properties, permits or prevents the passage of light.

Said liquid crystal is an organic material which occupies a metastable physical phase between an isotropic liquid state and a crystalline solid state. The molecules can move freely, but grouped together in an ordered fashion. The position, "direction", of these molecules is affected when they are exposed to an electric field. This electric field is achieved through the application of an a.c. voltage between two electrodes which are formed by the deposition of a film of transparent conducting material (tin-indium oxide) on the inner faces of the glass sheets, one of these electrodes taking a common planar form and the other the form of mutually insulated islands with contours of the figures or segments which it is desired to exhibit, independently of each other. A separate conductor, with which it is possible to select that segment to which the electric field is applied and those segments to which it is not applied, exits from each of these islands.

LCDs are classified according to the nature of the organic liquid-crystal material. The best-known types are:

a) those based on dichroic technology; and b) those based on twisted nematics technology.

## DICHROIC TECHNOLOGY

With this technology, tinted molecules are dissolved in the liquid crystal. In the quiescent state, that is to say when no electric field is applied, the molecules adopt a cylindrical shape and are oriented parallel to the glass sheets which form the sandwich, offering a certain resistance to the passage of light, the display adopting the shade of the colour with which the molecules were tinted.

On applying an electric field, said molecules tend to line up perpendicular to the glass sheets, allowing light through and, as a result thereof, the display appears clearer.

## TWISTED NEMATICS TECHNOLOGY

With this technology, the cylindrical molecules of the liquid crystal, in a quiescent state, are again in a position parallel to the glass sheets of the sandwich, but with the particular feature that these molecules experience a helical rotation in the plane parallel to the glass sheets which is all the greater the further they are from the first and the nearer they are to the second, where the rotation is by now 90°.

This effect confers a 90° rotation on the light which traverses the LCD.

An electric field having been applied, the molecules are aligned perpendicularly to the glass sheets, cancelling out the 90° rotation described above.

To this sandwich is added a light-polarising filter on the outer part of the first glass sheet and another polarising filter, rotated by 90° with respect to the first, on the outer part of the second glass sheet.

With this arrangement of the elements it transpires that, with the liquid crystal being quiescent, the light, on passing through the first filter, becomes polarised, the liquid crystal rotates by 90°, the polarity of the light thereby remaining optimally directed in order for the second polariser to allow the light through, as a result of which, for optical purposes, the assembly is totally transparent.

When the LCD is activated by an electric field, the crystal ceases to perform the 90° rotation and, the filters being polarised in different directions, the resulting assembly is opaque.

Also, LCDs can be classified according to the mode of illumination which is used.

A) transmission mode (TR): the light focus is to one side of the LCD, whilst the user is on the opposite side. The light, generally artificial, traverses the glass sheet and is incident on the user.

B) reflection mode (RE): the light focus and the user are on the same side of the LCD. To the glass sheets is added a reflective layer of the "mirror" type in the lower part, in such a way that the ambient light which traverses the LCD is reflected and sent back outside, where it meets the user.

C) transflection mode (TRRE): is the sum of the two earlier modes. The reflective layer has the property of reflecting light which arrives in one direction and of allowing through that which arrives via the other side, establishing the so-called "spy mirror" type.

Monochrome displays, that is to say segments or figures of a single colour, on a differently coloured background, are achieved with all these technologies described.

## SUMMARY OF THE INVENTION

The authors of the invention have developed a display in which, by applying liquid-crystal technologies which are known per se, it is possible to represent figures or segments which are selected according to a specified scheme and with different colours.

The colour image display device is characterised in that it consists of a stack of simple liquid-crystal display elements (LCD elements) according to twisted nematic technology, as many LCD elements being stacked as colours, white excepted, are desired; interposed polarising filters of various shades with predetermined shape and predetermined direction, constituting a compact assembly with the LCD elements; each being activators of alternating current and associated with each one of the LCD elements, mosaics of points, lines and complex shapes being arranged in the elements, the various images being achieved through sequences of "activated" /"non-activated" states of the elements; and a system of transflection illumination.

## DESCRIPTION OF THE DRAWINGS

The invention will be explained hereunder with the help of the attached drawings, in which:

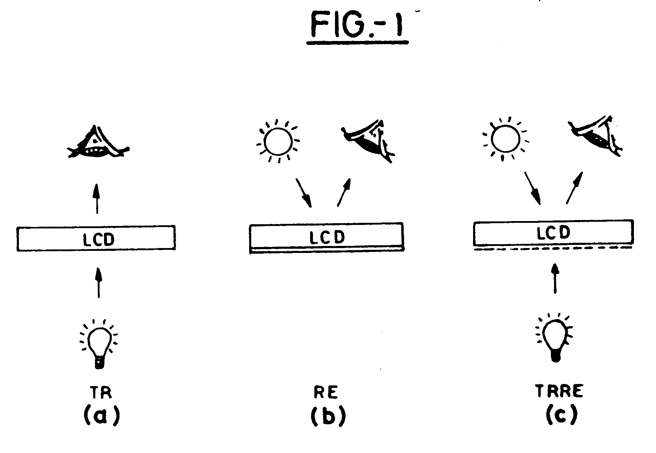

Figures 1a-c represent diagrammatically the three different modes of illumination;

Figures 2a-c represent diagrammatically the production of the three colours, white, red and black respectively;

Figures 3 to 8 represent various views, of which 6 and 7 are diagrammatic and the remainder plan views, related to a specific application to the cards of a French pack.

## DETAILED DESCRIPTION OF EMBODIMENTS OF THE INVENTION

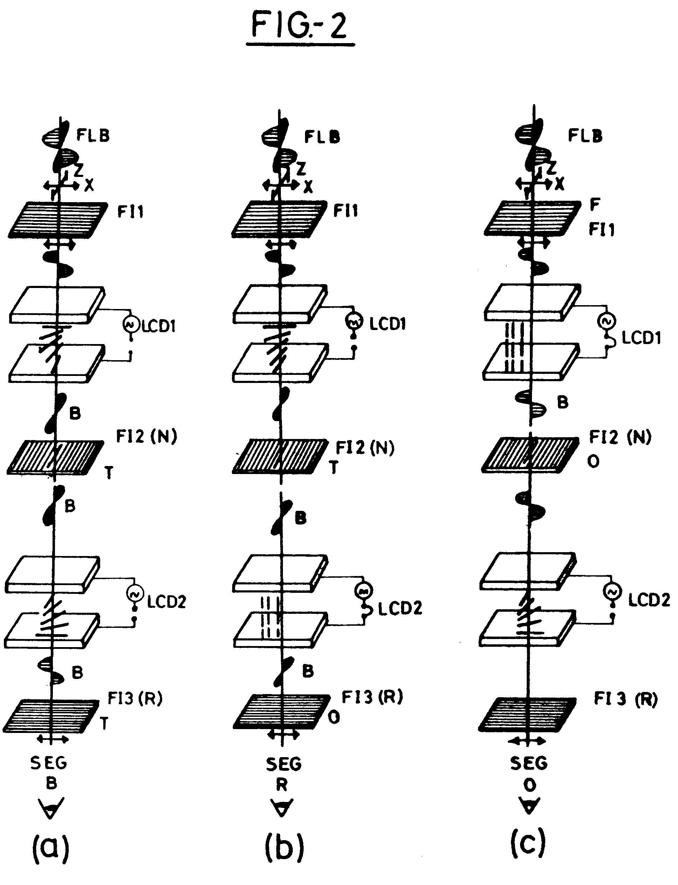

In a particular case, it is desired to achieve three colours, white, black and red. To do this, two LCD elements, interposed between three polarising filters (FI 1, 2, 3) which polarise white, black and red light respectively, are stacked in such a way that, on being illuminated according to the transflection system, whilst the two LCD elements (LCD1 and 2) are deactivated, a white segment SEG B is seen (Fig. 2a); on activating the second element (LCD2) a red-coloured segment SEG R is seen (Fig. 2b); and on activating the two elements (LCD1 and 2) a black-coloured segment SEG O is seen (Fig. 2c).

As a specific application of the system there may be mentioned that of the visual representation of the cards of a French pack in three colours, in this case red and black (grey) on a white background.

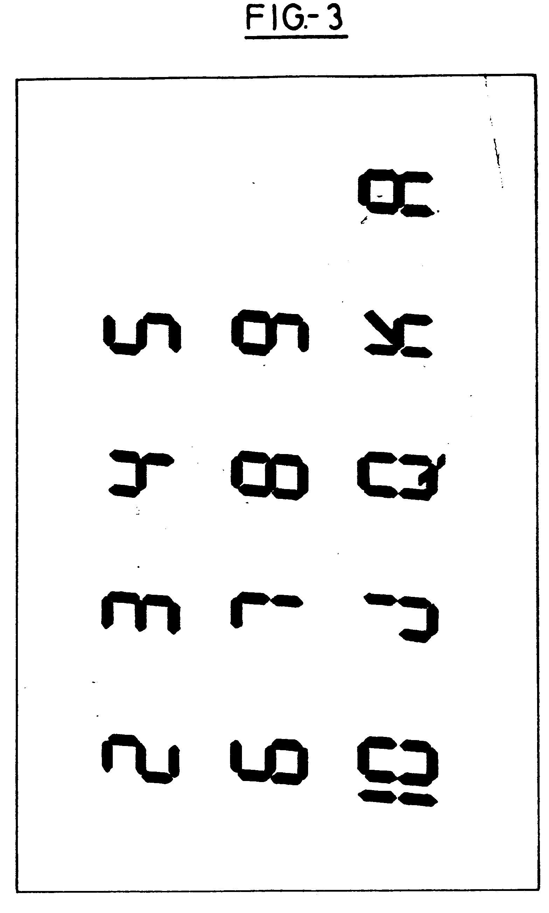

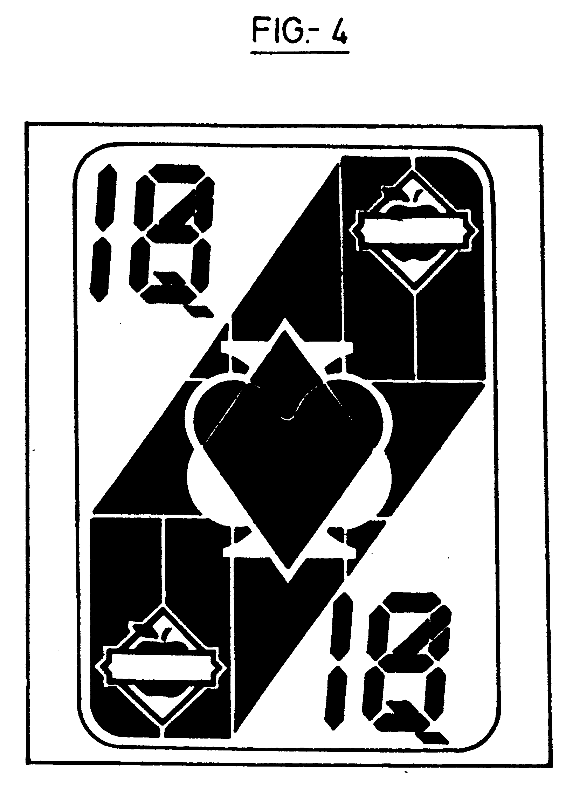

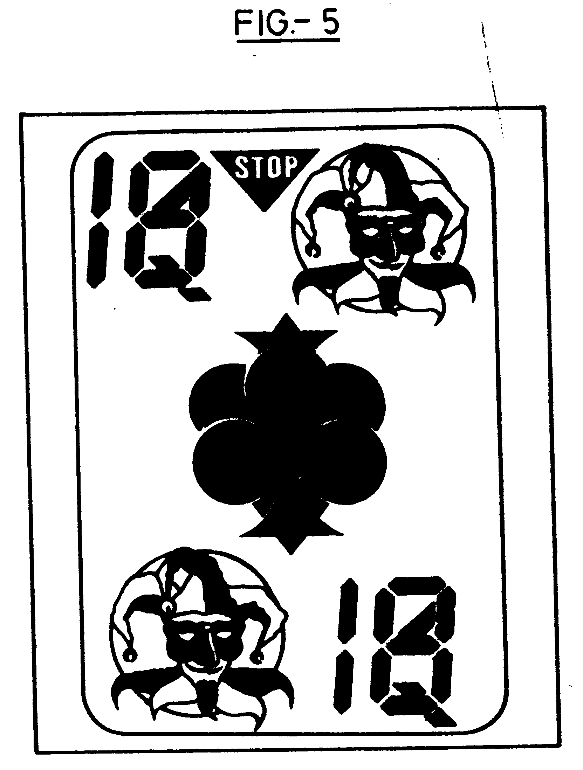

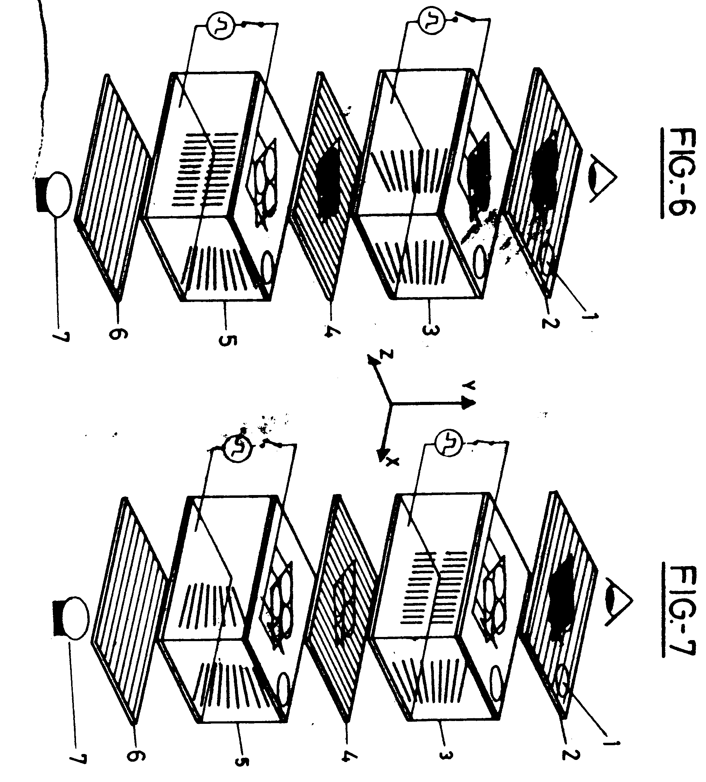

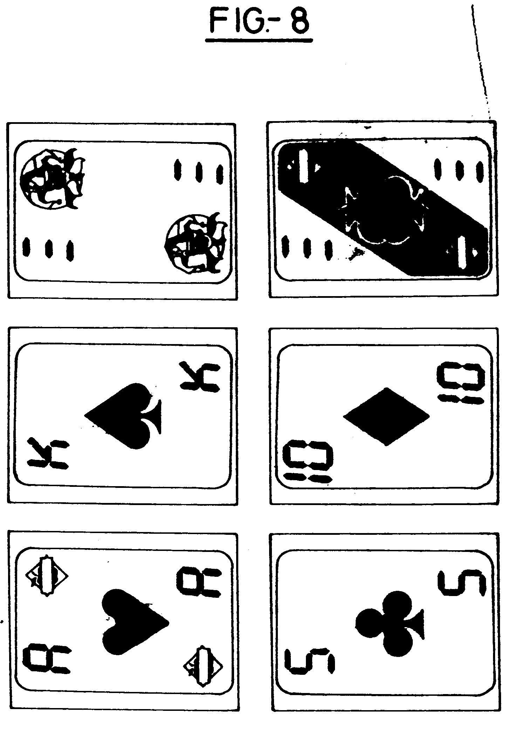

This specific application (see Figs. 6 and 7) consists of the arrangement of the segments in the two crystals, in the form indicated in Figs. 4 and 5, so that with selective activation thereof the numbers can be represented, in the format of Fig. 3, in the top left and bottom right corners of the card, in red and black colours, together with the suits, hearts and diamonds, coloured red, and spades and clubs, coloured black, in the centre of the card.

Furthermore, additional segments are used to exhibit a crossover fringe which will serve to simulate the back of the card, as well as the logo of the firm in red, and a "Joker" figure in black (Fig. 8).

In Figs. 6 and 7 is represented diagrammatically the stacking of the three polarising filters (2, 4 and 6) with the LCD crystals (3 and 5) required for this application.

To obtain a white segment or background the starting point is a light source (7). The two LCD crystals (3 and 5) are deactivated, the light polarised by the black polarising filter (6) in the X axis, on passing through the first LCD (5), undergoes a 90° rotation, the latter exiting polarised in the Z axis. The black polarising filter (4), on being polarised in the Z axis, allows the white light through, which undergoes a further 90° rotation on traversing the second LCD (3), becoming polarised in the X axis, in the same direction as that in which the red polarising filter (2) is aligned, the latter offering no resistance to the light incident upon it. As a result the user sees the white background or segment (1).

Starting from the light source (7) and from the filter (6), the figures or segments required to be of black colour (Fig. 6) are achieved by activating segments of the first LCD (5), whereupon the polarised light which traverses them undergoes no rotation and arrives at the black polarising filter (4) in the direction reverse to the latter, blocking the light and consequently the user will see them coloured black. Here this results in a black club.

Starting from the light source (7) and from the filter (6), the figures and segments of red colour (Fig. 7) are achieved by deactivating the segments of the first LCD (5) and activating those of the second LCD (3). The white light traverses the black polarising filter (4) but, the rotation in the second LCD (3) not being produced, the light which traverses it is still polarised in the Z axis, in the direction reverse to the red polarising filter ( 2 ), resulting in a figure with red shade. Here this results in a red diamond.

whilst the values of the individual cards appear at the top left and bottom right corners; likewise additional segments are represented in order to exhibit a crossover strip which will serve to simulate the back of the card, together with a logo and a joker figure in the relevant colours.

**Claims**

1. Colour image display device characterised in that it consists of a stack of simple liquid-crystal display elements (LCD elements) according to twisted nematic technology, as many LCD elements being stacked as colours, white excepted, are desired; interposed polarising filters of various shades with predetermined shape and predetermined direction, constituting a compact assembly with the LCD elements; each being activators of alternating current and associated with each one of the LCD elements, mosaics of points, lines and complex shapes being arranged in the elements, the various images being achieved through sequences of "activated" /"non-activated" states of the elements; and a system of transflection illumination.

2. Device according to Claim 1, characterised in that, in order to achieve three colours, white, black and red, two LCD elements, interposed between three polarising filters, are stacked in such a way that on being illuminated according to the tranflection system, whilst the two LCD elements (LCD 1 and 2) are deactivated, a white segment is seen; on activating the second element (LCD2) a red coloured segment is seen; and on activating the elements (LCD1 and 2) a black coloured segment is seen.

3. Device according to Claims 1 and 2, characterised in that the visual representation of the cards of a French pack is effected in three colours; the segments are arranged in the two glass sheets of the LCD elements in such a way that the four suits of the pack, that is to say clubs, hearts, diamonds and spades, appear at the centre of the image,

# FIG.- 1

TR
(a)

RE
(b)

TRRE
(c)

# FIG.-2

(a)        (b)        (c)

# FIG.- 3

# FIG.- 4

# FIG.- 5

FIG-7

FIG-6

EP 0 515 298 A2

# FIG.- 8